# EUROPEAN PATENT APPLICATION

(11) **EP 1 980 352 A1**
(43) Date of publication of application: **15.10.2008**
(21) Application number: 08154286.2
(22) Date of filing: 09.04.2008
(51) Int. Cl.: B23D 53/12, B23D 55/06

(54) **Portable band saw**

(30) Priority: 10.04.2007 CN 200720004634 U
(71) Applicant: Nebes Elettromeccanica di Besutti Giannino & C. S.N.C., Serravalle a Po (IT)
(72) Inventor: Besutti, Andrea, 46030 Serravalle a Po (IT); Tung Neng Chen, Taichung County 414 (TW)
(74) Representative: Jorio, Paolo

(57) **Abstract**

A portable belt saw (1) provided with an arm (10), an annular blade (17), a drive pulley (14) and a driven pulley (13) supporting the blade (17) and supported by the arm (10), and an actuator assembly (32) for rotating the drive pulley (14) provided with a DC permanent magnet motor (26).

## Description

### TECHNICAL FIELD

The present invention relates to a portable band saw.

### BACKGROUND ART

Specifically, the present invention relates to a portable band saw including an arm provided with a casing which partially covers a blade and encloses a first drive pulley which drives the blade in operation, and an actuator device for transmitting the motion to the drive pulley. The saw is normally employed to cut materials such as for example iron, steel, aluminium, brass, PVC, Teflon, at an adaptable speed according to the different materials and to machining needs.

The portable band saws of the type described above are specific to be used in constructions sites, where the ease of handling and use is fundamental.

The portable band saws of the above-described type are normally equipped with an electric motor normally referred to 'universal motor'. This type of motor is widely used, for example, in household appliances and in several small electromechanical tools, because it is able to combine relatively low costs and good performances. However, such motors are characterized by an essentially high revolution speed, in the order of 20000 rpm, and require the use of a reducer to transmit the motion to the first pulley, the reducer including a relatively high number of gears relatively small-sized and arranged in cascade, the presence of which causes a rather high sound pressure level which can be harmful for operators.

### DISCLOSURE OF INVENTION

It is the object of the present invention to provide a portable band saw, which is easy to handle, easy and cost-effective to make and which is free from the above-described drawbacks.

According to the present invention, a belt saw is provided as defined in claim 1 and, preferably, as defined in any one of the subsequent claims either directly or indirectly depending on claim 1.

### BRIEF DESCRIPTION OF THE DRAWINGS

The present invention will now be described with reference to the accompanying drawings, which show a non-limitative embodiment thereof, in which:
- figure 1 shows a side elevational view of a preferred embodiment of the portable band saw of the present invention;
- figure 2 shows an exploded detail of the saw in figure 1.

### BEST MODE FOR CARRYING OUT THE INVENTION

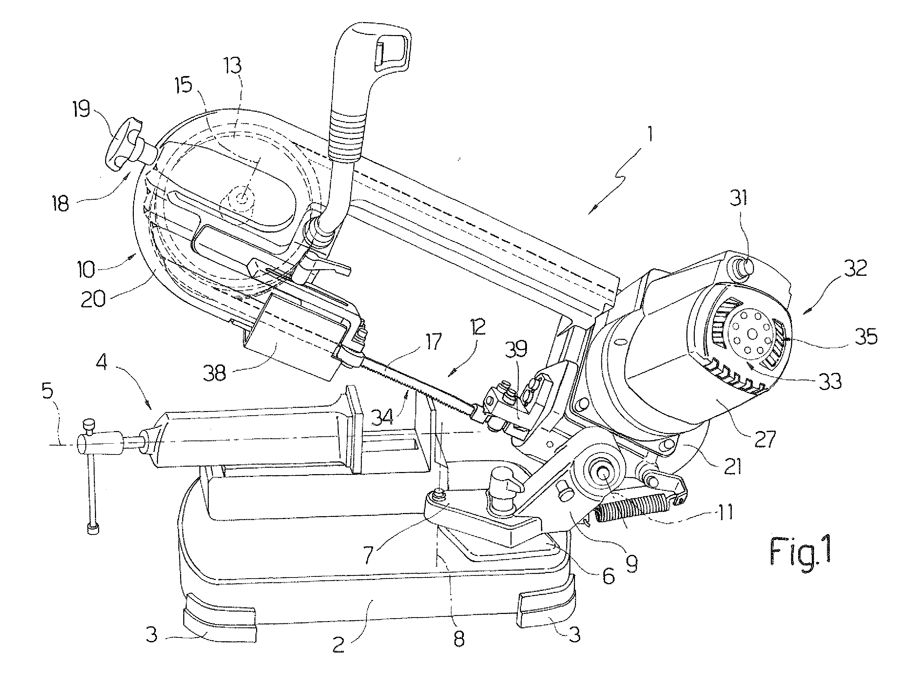

In figure 1, numeral 1 indicates as a whole a portable band saw, which includes an essentially rectangular-shaped base platform 2 provided with supporting feet 3. The platform 2 supports a piece-holder vice 4, which is adapted to lock a piece (not shown) to be cut in a position transversal to a main longitudinal axis 5 of the platform 2 itself.

At one longitudinal end thereof, the platform 2 carries an indexed plate 6 connected thereto, the indexed plate 6 supporting a carousel 7, which is mounted on the platform 2 to rotate about a vertical axis 8 and includes an upright 9, on the free end of which an arm 10 is hinged and adapted to oscillate about an essentially horizontal axis 11, towards and away from the platform 2.

The arm 10 supports a cutting device 12 defined by two pulleys 13 and 14 made of cast-iron and mounted on the arm 10 to rotate about corresponding, reciprocally parallel axes 15 and 16, and a ring blade 17 looped about the pulleys 13 and 14. The pulley 14 is a drive pulley and its axis 16 is a fixed axis with respect to the arm 10, while the pulley 13 is a driven pulley and its axis 15 is transversally movable with respect to the arm 10 under the bias of a blade-tensioning device 18 of a known type, provided with an adjustment wheel 19.

The arm 10 is essentially U-shaped in plan and includes two end portions, the first of which, indicated by 20 and arranged at the free end of the arm 10, supports the pulley 13, while the second, indicated by 21, supports the pulley 14 and displays, above the pulley 14, a closed opening from the basis of a cup-shaped body 22, which is removably connectable to the end portion 21 in a position which is coaxial to the axis 16 and defines a chamber 23 accommodating a reduction gearbox 24, including in this case three gears arranged in cascade; an inlet of the reduction gearbox 24 is coupled to an outlet portion of a through shaft 25 of a DC electric permanent magnet motor 26, while an outlet of the reduction gearbox 24 is coupled to the pulley 14 by means of a shaft 25a pivotally supported by the arm 10.

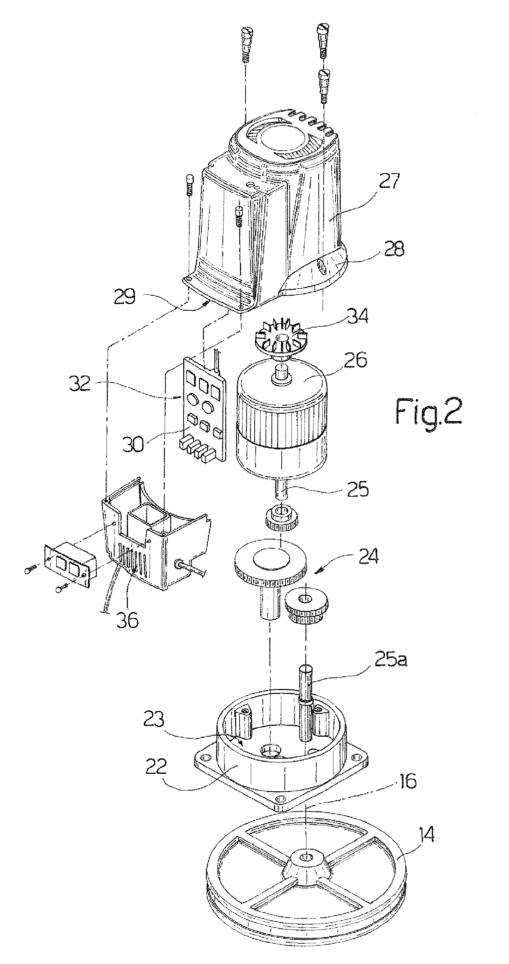

As shown in greater detail in figure 2, the electric motor 26 is accommodated inside a shell 27 made of plastic material, which includes a base 28 removably connected to the cup-shaped body 22 and serving as a cover for the chamber 23, and displays a side pocket 29 accommodating an electronic inverter board 30 coupled to an adjuster 31 and adapted, in a known manner, to adjust the speed of the electric motor 26 and, thus, of the blade 17, according to the nature of the material to be cut, and to maintain the consumption of the electric motor 26 below a determined value.

The electric motor 26 and the electronic board 30 constitute an actuator assembly 32, which is cooled by a cooling device 33, which includes a fan 34, which is arranged inside an end portion of the shell 27, opposite to the base 28 and facing an end of the electric motor 26. The fan 34 is splined to the shaft 25 of the electric motor 26 and is arranged along a pneumatic circuit (not shown), which surrounds, in addition to the fan 34, the electric motor 26 and the electronic board 30, and communicates with the outside by means of a plurality of inlet holes 35 and a plurality of outlet holes 36 obtained through the shell 27 on opposite sides of the actuator assembly 32.

The arm 10 essentially covers the entire blade 17 except for a working portion 37 facing the platform 2 and arranged between the end portions 20 and 21. Specifically, the working portion 37 is limited by two blade-guide devices 38 and 39, which are connected to the end portion 20 and to the end portion 21, respectively, and the blade-guide device 39 is connected in a fixed manner to the end portion 21, while the blade-guide device 38 is slidingly connected to the terminal portion 20 to allow an adjustment of the length of the working portion 37 of the blade 17.

It is worth emphasizing that the above-described portable band saw 1 displays many advantages. The DC electric permanent magnet motor 26 is able to develop an essentially high torque and to have good performances also at relatively low rotation speeds, i.e. in the order of 3000 rpm. The above-described portable band saw 1 is provided with a reduced number of gears, which are designed so as to minimize wear, vibrations and produced noise and requires quick assembly and maintenance times, ensuring safe operating conditions for the operator.

## Claims

1. A portable belt saw (1) comprising an arm (10), an annular blade (17), a drive pulley (14) and a driven pulley (13) supporting the blade (17) and supported by the arm (10), and an actuator assembly (32) for rotating the drive pulley (14);
the portable belt saw (1) being **characterized in that** said actuator assembly (32) comprises a DC permanent magnet motor (26).

2. A saw according to claim 1, wherein the actuator assembly (22) includes an electronic inverter board (30) for adjusting the speed of the blade (17).

3. A saw according to any one of the preceding claims, and including a reduction gearbox (24) interposed between the drive pulley (14) and the actuator assembly (32); the drive pulley (14) displaying a shaft (25a) pivotally supported by the arm (10) and connected to an outlet of the reduction gearbox (24).

4. A saw according to any one of the preceding claims, and comprising a shell (27) accommodating the actuator assembly (32) and supported by the arm (10).

5. A saw according to claim 4, wherein the electronic inverter board (30) is arranged by the side of the motor (26).

6. A saw according to claim 4 or 5, wherein the shell (27) is made of plastic material.

7. A saw according to any one of claims from 4 to 6, wherein a cooling fan (34) is accommodated inside the shell (27) in a position which faces a first end of the motor (26); inlet holes (35) and outlet holes (36) for the air being obtained through the shell (27) on opposite sides of the actuator assembly (32).

8. A saw according to claim 6 or 7, and including a chamber (23) arranged on the arm (10) in a position which is adjacent to the shell (27); the reduction gearbox (24) being accommodated inside said chamber (23).

9. A saw according to any one of the preceding claims, wherein the arm (10) partially covers the blade (17) leaving uncovered a working portion (37) of the blade (17) itself; two blade-guide devices (38, 39) being mounted on the arm (10) to define said working portion (37).

10. A saw according to claim 9, wherein at least one of said blade-guide devices (39) is movable with respect to the arm (10) and towards and from the other blade-guide device (38), so as to vary the length of the working portion (37) of the blade (17).
